**Europäisches Patentamt**

**European Patent Office**

**Office européen des brevets**

(19)

(11) Veröffentlichungsnummer : **0 102 463**
**B1**

(12)

# EUROPÄISCHE PATENTSCHRIFT

(45) Veröffentlichungstag der Patentschrift :
**16.04.86**

(21) Anmeldenummer : **83105970.4**

(22) Anmeldetag : **18.06.83**

(51) Int. Cl.⁴ : **F 16 D 65/09**

(54) **Halbschalenlagerung für die Bremsbacken einer Trommelbremse.**

(30) Priorität : **10.07.82 DE 3225954**

(43) Veröffentlichungstag der Anmeldung :
**14.03.84 Patentblatt 84/11**

(45) Bekanntmachung des Hinweises auf die Patenterteilung : **16.04.86 Patentblatt 86/16**

(84) Benannte Vertragsstaaten :
**DE FR GB IT NL**

(56) Entgegenhaltungen :
**EP-A- 0 044 377**
**DE-C-  844 715**
**DE-U- 8 219 855**
**GB-A-  898 646**
**GB-A- 1 602 333**
**GB-A- 2 054 069**

(73) Patentinhaber : **Bergische Achsenfabrik Fr. Kotz &**
**Söhne**
**Am Ohlerhammer**
**D-5276 Wiehl 1 (DE)**

(72) Erfinder : **Ebbinghaus, Wilfried**
**Perkerstrasse 42**
**D-5276 Wiehl 1 (DE)**
Erfinder : **Henze, Erwin**
**Freiherr-vom-Stein-Strasse 28**
**D-5276 Wiehl (DE)**

(74) Vertreter : **Patentanwälte Dipl.-Ing. Alex Stenger**
**Dipl.-Ing. Wolfram Watzke Dipl.-Ing. Heinz J. Ring**
**Kaiser-Friedrich-Ring 70**
**D-4000 Düsseldorf 11 (DE)**

## Beschreibung

Gegenstand der Erfindung ist eine Halbschalenlagerung für die Bremsbacken einer Trommelbremse mit zwei in Lagerbuchsen einer an einem Achskörper befestigten Bremsbrücke axial zentriert und verdrehsicher angeordneten Bremsbolzen, auf denen sich Doppelstege der Bremsbacken mit Halbschalen abstützen, und mit einem Ende an den Bremsbacken angreifenden Spannfedern.

Aus der EP-A-0 044 377 ist eine gattungsgemäße Halbschalenlagerung bekannt, bei der die Bremsbolzen mit einer an den Bremsbacken angreifenden Spannfeder in axialer Richtung zentriert sind. Die verdrehsichere Befestigung der Bremsbolzen in der Bremsbrücke erfolgt mit einer Schraubverbindung.

Aus der CB-A-1 602 333 ist eine Halbschalenlagerung für die Bremsbacken einer Trommelbremse bekannt, bei der die Bremsbolzen außerhalb der Bremsbrücke mit Nuten versehen sind, in welchen sich die Bremsbacken abstützen. Bei dieser Konstruktion sind die Bremsbolzen nur in axialer Richtung zentriert. Eine Verdrehsicherung ist nicht vorgesehen.

Aus der DE-PS 844 715 ist eine Halbschalenlagerung für die Bremsbacken einer Trommelbremse bekannt, bei der zwischen einem an der Bremsbrücke befestigten, nachstellbaren Stützlager und den Bremsbacken Stützrollen mit einer Mittelnut angeordnet sind, in welche die Stege der Bremsbacken und Führungsnasen des Stützlagers eingreifen. Bei dieser Konstruktion sind die Stützrollen ebenfalls nur in axialer Richtung zentriert. Eine Verdrehsicherung ist nicht vorgesehen.

Davon ausgehend liegt der Erfindung die Aufgabe zugrunde, eine einfach konstruierte Halbschalenlagerung für die Bremsbacken einer Trommelbremse zu schaffen, die gleichzeitig eine axiale Zentrierung und verdrehsichere Befestigung der Bremsbolzen an der Bremsbrücke ohne eine Schraubverbindung ermöglicht.

Zur technischen Lösung dieser Aufgabe wird eine gattungsgemäße Halbschalenlagerung vorgeschlagen, bei der in den Bremsbolzen beiderseits der Lagerbuchsen der Bremsbrücke radiale Keilnuten angeordnet und in die Keilnuten Keile eingesetzt sind, an denen die Spannfedern mit ihrem anderen Ende angreifen.

Eine nach dieser technischen Lehre ausgebildete Halbschalenlagerung ist nicht nur einfach konstruiert und damit einfach zu montieren und zu demontieren, sondern bewirkt neben einer axialen Zentrierung gleichzeitig auch eine verdrehsichere Befestigung der Bremsbolzen an der Bremsbrücke ohne eine zusätzliche Schraubverbindung. Eine verdrehsichere Befestigung der Bremsbolzen an der Bremsbrücke hat den Vorteil, daß die Lagerung der Bremsbolzen in der Bremsbrücke keinem Verschleiß unterliegt. Verschleißteile sind im Bereich der Bremsbackenlagerung nur die Halbschalen an den Bremsbacken und die Bremsbolzen. Diese Konstruktionsteile sind beweglich und können leicht ausgewechselt werden. Bei einem Verschleiß der Lager in der Bremsbrücke, die ihrerseits starr mit dem Achskörper verschweißt ist, müßte dagegen der Achskörper mit den Bremsbrücken ausgetauscht werden.

Bei praktischen Ausführungsformen können die Keile sowohl von außen als auch von innen in die Keilnuten der Bremsbolzen eingesetzt sein, während die Spannfedern in beiden Fällen an Zapfen am äußeren Ende der Keile angreifen. Damit ist der Vorteil verbunden, daß die Spannfedern im Falle eines Bruches von außen und ohne eine vollständige Demontage der Trommelbremse ausgewechselt werden können.

Die Spannfedern selbst können bei praktischen Ausführungsformen sowohl als Zug- und Schenkelfedern ausgebildet sein, welche an den Bremsbolzen vorbeigeführt sind und diese nicht berühren. Es ist aber auch möglich, die Spannfedern als Schenkelfedern auszubilden und auf den Enden der Bremsbolzen anzuordnen. Die in Umfangsrichtung verlaufenden und wirksamen Spannfedern dienen der Sicherung der Keile in ihrer Gebrauchslage und gleichzeitig verspannen sie die Bremsbacken. Sie können erheblich schwächer dimensioniert werden als die Spannfedern bei den bekannten Halbschalenlagerungen.

Schließlich hat es sich als zweckmäßig erwiesen, die Keile mit nach innen abgewinkelten Distanzstücken zu versehen, die sich an den Lagerbuchsen der Bremsbrücke abstützen und damit gleichzeitig die Bremsbolzen in einer definierten Gebrauchslage in ihren Lagerbuchsen fixieren.

Weitere Einzelheiten und Vorteile des Gegenstandes der Erfindung ergeben sich aus der nachfolgenden Beschreibung der zugehörigen Zeichnungen, in denen mehrere bevorzugte Ausführungsformen einer erfindungsgemäß ausgebildeten Halbschalenlagerung in Ansichten und Schnitten dargestellt worden sind. In den Zeichnungen zeigen :

Figur 1 eine Halbschalenlagerung mit von außen eingesetzten Keilen entlang der Linie I-I in Fig. 2 geschnitten in Ansicht ;

Figur 2 dieselbe Halbschalenlagerung entlang der Linie II-II in Fig. 1 geschnitten in Seitenansicht ;

Figur 3 eine Halbschalenlagerung mit von innen her eingesetzten Keilen entlang der Linie III-III in Fig. 4 geschnitten in Ansicht ;

Figur 4 dieselbe Halbschalenlagerung entlang der Linie IV-IV in Fig. 3 geschnitten in Seitenansicht ;

Figur 5 die Halbschalenlagerung nach den Fig. 1 bis 4 entlang den Linien V-V in den Fig. 1 und 3 geschnitten in Draufsicht ;

Figur 6 eine Halbschalenlagerung mit von außen her eingesetzten Keilen und auf den Bremsbolzen angeordneten Schenkelfedern entlang der Linie VI-VI in Fig. 7 geschnitten in Ansicht ;

Figur 7 dieselbe Halbschalenlagerung entlang der Linie VII-VII in Fig. 6 geschnitten in Seitenansicht ;

Figur 8 dieselbe Halbschalenlagerung entlang der Linie VIII-VIII in Fig. 6 geschnitten in Draufsicht.

Auf einem Achskörper 1 ist eine Bremsbrücke 2 befestigt, welche an einem Ende ein Lager 3 für eine Bremswelle 4 mit einem Spreiznocken 5 besitzt und an ihrem anderen Ende mit Lagerbuchsen 6 für Bremsbolzen 7 versehen ist.

Zwischen dem Bremsnocken 5 und den Bremsbolzen 7 sind zwei Bremsbacken 8, 9 angeordnet, die sich mit Halbschalen 10 auf den Bremsbolzen 7 abstützen. Die Halbschalen 10 sind an Doppelstegen 11 der beiden Bremsbacken 8, 9 befestigt.

Zwischen dem Achskörper 1 und dem Spreiznocken 5 werden die Bremsbacken 8, 9 mit Zugfedern 12 zusammengezogen, welche auf zwischen den Doppelstegen 11 angeordneten Riffelbolzen 13 befestigt sind. Die beiden Bremsbacken 8, 9 können somit gegen die Wirkung der Zugfedern 12 mit dem Spreiznocken 5 unter Zwischenlage ihrer Bremsbeläge 14 zur Anlage an eine Bremstrommel 15 gebracht werden.

Die beiden Bremsbolzen 7 besitzen an beiden Enden radiale Keilnuten 16, in denen Keile eingesetzt sind, welche gleichzeitig eine Zentrierung und Befestigung der Bremsbolzen 7 an den Lagerbuchsen 6 bewirken.

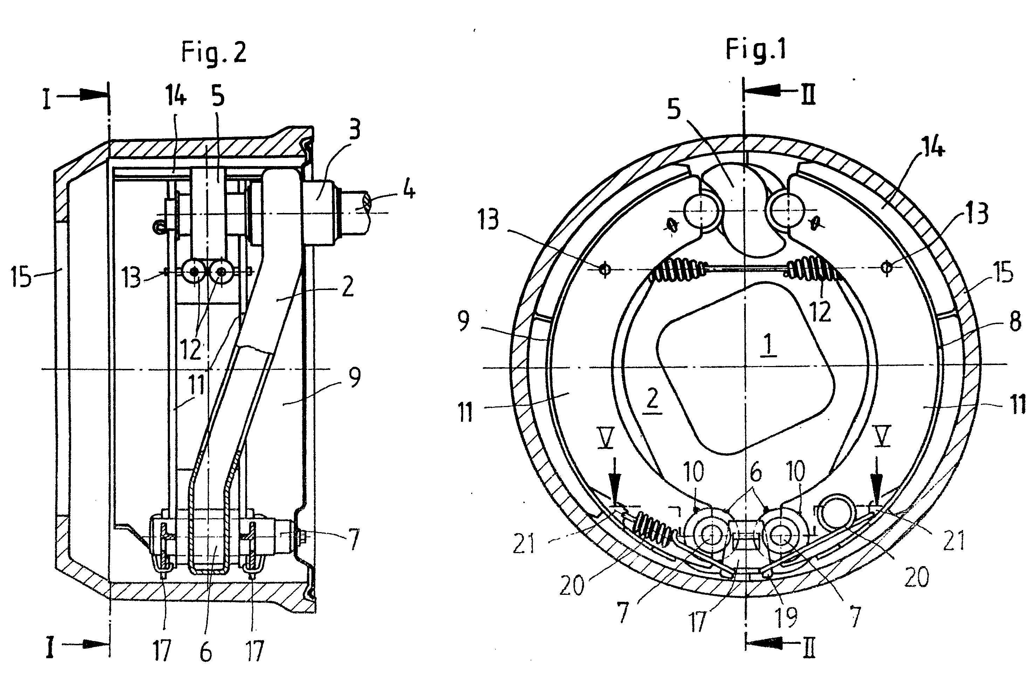

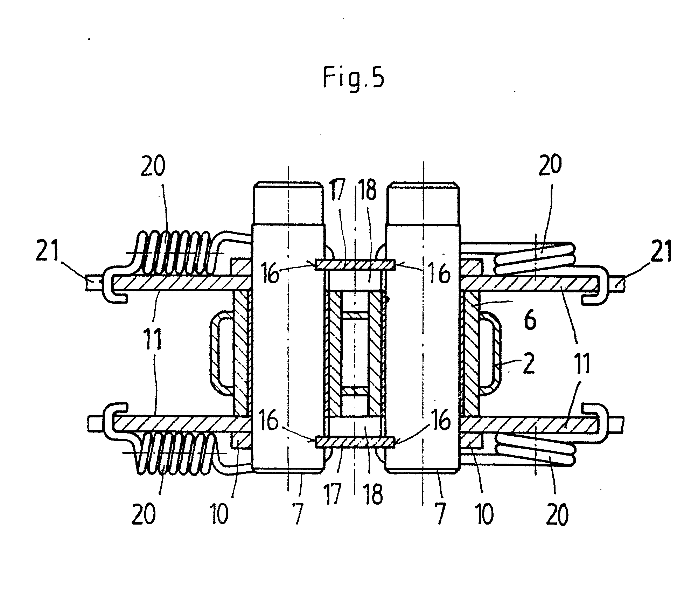

Bei der Ausführungsform gemäß den Fig. 1 und 2 sind Keile 17 von außen in die Keilnuten 16 eingesetzt, die sich mit nach innen abgewinkelten Distanzstücken 18 an den Lagerbuchsen 6 abstützen (Fig. 5). An ihren breiteren, außenliegenden Enden sind die Keile 17 mit Zapfen 19 versehen, an denen Zugfedern 20 angreifen, die entweder ein Schraubenfederteil (linke Hälfte in Fig. 1) oder ein Drehfederteil (rechte Hälfte in Fig. 1) besitzen. Die Zugfedern 20 sind in Ausnehmungen 21 der Doppelstege 11 eingehängt und verlaufen annähernd in Umfangsrichtung.

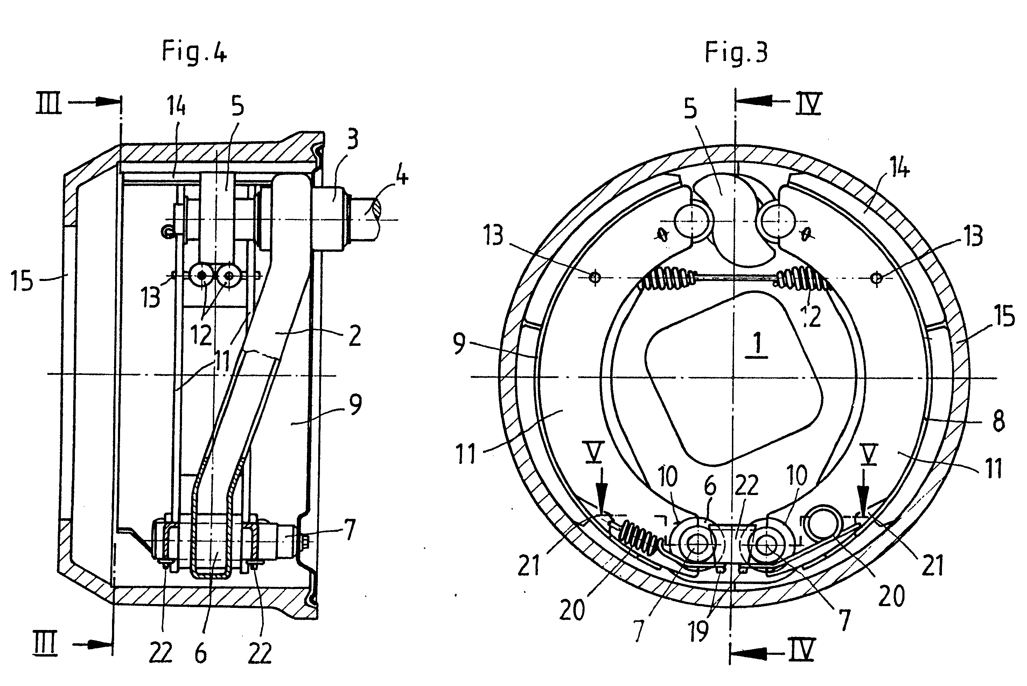

Bei der Ausführungsform gemäß den Fig. 3 und 4 sind Keile 22 von innen her in die radialen Keilnuten 16 eingesetzt, bei denen die Zapfen für die Zugfedern 20 am schmaleren, äußeren Ende sitzen. Im übrigen unterscheiden sich die beiden Ausführungsformen gemäß Fig. 1, 2 und 3, 4 nicht, so daß die Schnittzeichnung gemäß Fig. 5 für beide Ausführungsformen gilt.

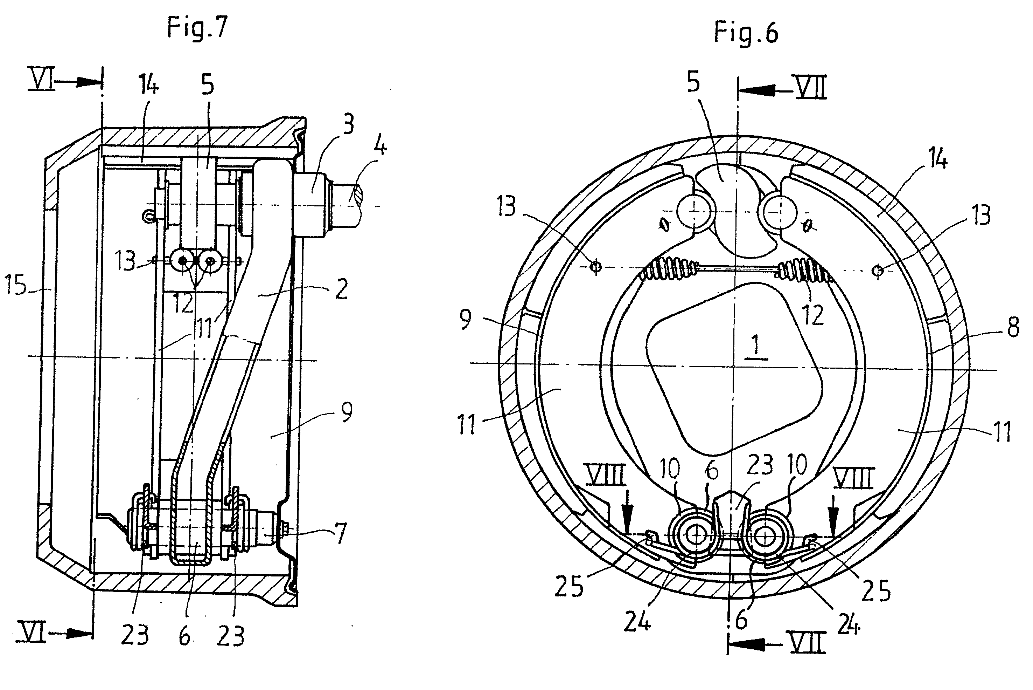

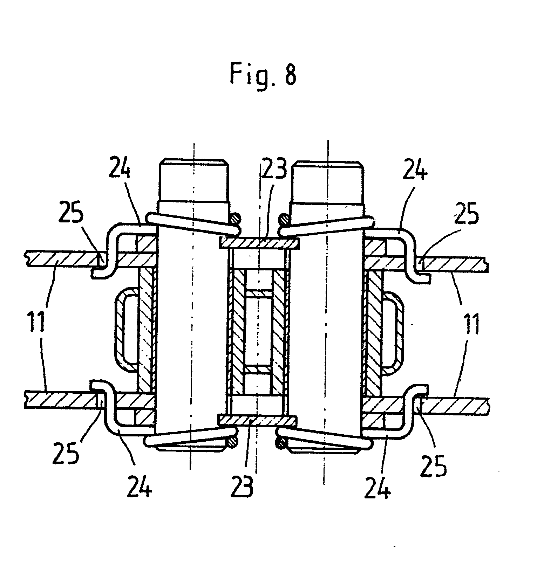

Bei der Ausführungsform gemäß den Fig. 6 bis 8 sind Keile 23 von außen her in die Keilnuten 16 der Bremsbolzen eingesetzt, welche mit Schenkelfedern 24 vorgespannt sind, die einerseits an den Seiten der Keile 23 angreifen und andererseits in Schlitze 25 der beiden Doppelstege 11 eingehängt sind. Die spiralig gewickelten Federteile der Schenkelfedern 24 sind auf den Enden der Bremsbolzen 7 angeordnet. Mit dieser Halbschalenlagerung werden die Bremsbacken 8, 9 nicht nur kraftschlüssig, sondern auch formschlüssig auf den Bremsbolzen 7 fixiert.

Bezugzeichenliste

1 Achskörper
2 Bremsbrücke
3 Lager
4 Bremswelle
5 Spreiznocken
6 Lagerbuchse
7 Bremsbolzen
8 Bremsbacke
9 Bremsbacke
10 Halbschale
11 Doppelsteg
12 Zugfeder
13 Riffelbolzen
14 Bremsbelag
15 Bremstrommel
16 Keilnut
17 Keil
18 Distanzstück
19 Zapfen
20 Zugfeder
21 Ausnehmung
22 Keil
23 Keil
24 Schenkelfeder
25 Schlitz

**Patentansprüche**

1. Halbschalenlagerung für die Bremsbacken einer Trommelbremse mit zwei in Lagerbuchsen einer an einem Achskörper befestigten Bremsbrücke axial zentriert und verdrehsicher angeordneten Bremsbolzen, auf denen sich Doppelstege der Bremsbacken mit Halbschalen abstützen, und mit einem Ende an den Bremsbacken angreifenden Spannfedern, dadurch gekennzeichnet, daß in den Bremsbolzen (7) beiderseits der Lagerbuchsen (6) der Bremsbrücke (2) radiale Keilnuten (16) angeordnet sind und daß in die Keilnuten (16) Keile (17, 22, 23) eingesetzt sind, an denen die Spannfedern (20, 24) mit ihrem anderen Ende angreifen.

2. Halbschalenlagerung nach Anspruch 1, dadurch gekennzeichnet, daß die Keile (17) von außen in die Keilnuten (16) eingesetzt sind und die Spannfedern (20) an Zapfen (19) am breiteren Ende der Keile (17) angreifen.

3. Halbschalenlagerung nach Anspruch 1, dadurch gekennzeichnet, daß die Keile (22) von innen in die Keilnuten (16) eingesetzt sind und die Spannfedern (20) an Zapfen (19) am schmaleren Ende der Keile (22) angreifen.

4. Halbschalenlagerung nach den Ansprüchen 1 und 2 oder 3, dadurch gekennzeichnet, daß die Spannfedern als Zugfedern (20) ausgebildet und an den Bremsbolzen (7) vorbeigeführt sind.

5. Halbschalenlagerung nach Anspruch 1, dadurch gekennzeichnet, daß die Spannfedern als Schenkelfedern (24) ausgebildet und auf den Enden der Bremsbolzen (7) angeordnet sind.

6. Halbschalenlagerung nach den Ansprüchen 1 bis 5, dadurch gekennzeichnet, daß die Keile (17, 22, 23) mit im rechten Winkel abstehenden Distanzstücken (18) an den Lagerbuchsen (6) der Bremsbrücke (2) abgestützt sind.

## Claims

1. Half bush bearing for the brake shoes of a drum brake with two brake bolts in a bearing bush of a brake bridge which is axially centrally and non-rotatably fixedly disposed on an axle means, on which brake bolts twin stays of the brake shoes are supported by means of half bushes, and tension springs with one end gripping the brake shoes characterised in that radial key ways (16) are arranged in the brake bolts (7) on both sides of the bearing bush (6) of the brake bridge (2), and in that wedges (17, 22, 23) are inserted into the key ways (16) the tension springs (20, 24) gripping said wedges by means of their other ends.

2. Half bush bearing according to claim 1, characterised in that the wedges (17) are inserted from the outside into the key ways (16) and the tension springs (20) grip pegs (19) on the broader end of the wedge (17).

3. Half bush bearing according to claim 1, characterised in that the wedges (22) are inserted from the inside into the key ways (16) and the tension springs (20) grip pegs (19) on the narrower end of the wedge (17).

4. Half bush bearing according to claims 1 and 2 or 3, characterised in that the tension springs are formed as draw springs (20) and are guided past the brake bolts (7).

5. Half bush bearing according to claim 1, characterised in that the tension springs are formed as shank springs (24) and are disposed on the ends of the brake bolts (7).

6. Half bush bearing according to claims 1 to 5, characterised in that the wedges (17, 22, 23) are supported by means of spacers (18) extending at right angles to the bearing bush (6) of the brake bridge (2).

## Revendications

1. Palier à demi-coquille pour les mâchoires de frein d'un frein à tambour comportant deux tourillons de freins disposés en centrage axial et pivotables dans des coussinets d'une pièce support fixée à un corps d'essieu, sur lesquels s'appuient les doubles âmes des mâchoires de frein par une demi-coquille, et comportant des ressorts fixés par une extrémité aux mâchoires de frein, caractérisé en ce que des rainures de clavettes radiales (16) sont disposées sur les tourillons (7) de chaque côté des coussinets (6) de la pièce support (2), et en ce que des clavettes (17, 22, 23) sont insérées dans les rainures (16) sur lesquelles les ressorts de tension (20, 24) sont fixés par leur autre extrémité.

2. Palier à demi-coquille selon la revendication 1, caractérisé en ce que les clavettes (17) sont insérées de l'extérieur dans les rainures de clavettes (16), et les ressorts de tension (20) sont en prise sur des tenons (19) à l'extrémité la plus large des clavettes (17).

3. Palier à demi-coquille selon la revendication 1, caractérisé en ce que les clavettes (22) sont insérées de l'intérieur dans les rainures de clavettes (16), et les ressorts de tension (20) sont en prise sur des tenons (19) à l'extrémité la plus étroite des clavettes (22).

4. Palier à demi-coquille selon les revendications 1 et 2 ou 3 caractérisé en ce que les ressorts de tension sont sous forme de ressorts de traction (20), et s'étendent devant les tourillons (7).

5. Palier à demi-coquille selon la revendication 1, caractérisé en ce que les ressorts de tension sont en forme de ressorts à branche (24) et sont disposés sur les extrémités des tourillons (7).

6. Palier à demi-coquille selon les revendications 1 à 5, caractérisé en ce que les clavettes (17, 22, 23) sont en appui sur les coussinets (6) de la pièce support (2) par l'intermédiaire d'entretoises (18) à angle droit.

Fig.1

Fig.2

Fig.4

Fig.3

0 102 463

## Fig.5

Fig.7

Fig.6

0 102 463

## Fig. 8